# EUROPEAN PATENT APPLICATION

(11) **EP 1 347 667 A2**
(43) Date of publication of application: **24.09.2003**
(21) Application number: 03250097.7
(22) Date of filing: 08.01.2003
(51) Int. Cl.: H04Q 7/38

(54) **Method of indicating unauthorized use of a mobile terminal**

(30) Priority: 19.03.2002 US 100898
(71) Applicant: Huang, June-Kewi, Tan-Tze Hsiang, Taichung Hsien (TW)
(72) Inventor: Huang, June-Kewi, Tan-Tze Hsiang, Taichung Hsien (TW)
(74) Representative: Rees, Alexander Ellison

(57) **Abstract**

In a method of indicating unauthorized use of a mobile terminal (1), subscriber identification data of an owner's subscriber identification module card (2) installed within the mobile terminal (1) is stored in a memory unit (12). The owner of the mobile terminal (1) sets a caller alert group that includes a call number associated with the subscriber identification module card (2) of the owner of the mobile terminal (1). During subsequent activation of the mobile terminal (1), the mobile terminal (1) establishes a communications link with a communications network in accordance with a subscriber identification module card (2) installed within the mobile terminal (1). When the subscriber identification data stored in the memory unit (12) of the mobile terminal (1) does not match that of the subscriber identification module card (2) installed within the mobile terminal (1), the mobile terminal (1) sends a message to the caller alert group via the communications network.

## Description

The invention relates to a mobile terminal, more particularly to a method of indicating unauthorized use of a mobile terminal.

A mobile terminal, such as a mobile phone, may be equipped with anti-theft means for preventing unauthorized use thereof. However, when the mobile terminal is misplaced or stolen, the conventional anti-theft means does not permit finding of the mobile terminal.

Therefore, the object of the present invention is to provide a method of indicating unauthorized use of a mobile terminal.

According to one aspect of the present invention, there is provided a method of indicating unauthorized use of a mobile terminal that is adapted to be installed with a subscriber identification module card for wireless communication with a communications network. The subscriber identification module card contains subscriber identification data. The method comprises the steps of:
(a) allowing the owner of the mobile terminal to store the subscriber identification data of the subscriber identification module card of the owner in a memory unit of the mobile terminal;
(b) allowing the owner of the mobile terminal to set a caller alert group which includes a call number that is associated with the subscriber identification module card of the owner of the mobile terminal;
(c) during subsequent activation of the mobile terminal, allowing the mobile terminal to establish a communications link with the communications network in accordance with the subscriber identification module card installed within the mobile terminal;
(d) upon establishing the communications link with the communications network, verifying whether the subscriber identification data stored in the memory unit of the mobile terminal matches that of the subscriber identification module card installed within the mobile terminal; and
(e) when a match is not detected, enabling the mobile terminal to send a message to the caller alert group via the communications network, the message including the subscriber identification data of the subscriber identification module card installed within the mobile terminal and an equipment serial code associated with the mobile terminal.

According to another aspect of the present invention, there is provided a computer program product for a mobile terminal that is adapted to be installed with a subscriber identification module card for wireless communication with a communications network. The mobile terminal includes a user input unit, a memory unit, and a processor unit coupled to the user input unit and the memory unit. Thesubscriberidentification module card contains subscriber identification data. The computer program product enables the mobile terminal to indicate unauthorized use thereof. The computer program product comprises:
a computer readable storage medium comprising:
   a first code that directs the processor unit to allow the owner of the mobile terminal to store the subscriber identification data of the subscriber identification module card of the owner in the memory unit of the mobile terminal;
   a second code that directs the processor unit to allow the owner of the mobile terminal to set a caller alert group via the user input unit, the caller alert group including a call number that is associated with the subscriber identification module card of the owner of the mobile terminal;
   a third code that directs the processor unit to allow the mobile terminal to establish a communications link with the communications network in accordance with the subscriber identification module card installed within the mobile terminal during subsequent activation of the mobile terminal;
   a fourth code that directs the processor unit to verify whether the subscriber identification data stored in the memory unit of the mobile terminal matches that of the subscriber identification module card installed within the mobile terminal when the communications link with the communications network is established; and
   a fifth code that directs the processor unit to enable the mobile terminal to send a message to the caller alert group via the communications network when a match is not detected, the message including the subscriber identification data of the subscriber identification module card installed within the mobile terminal and an equipment serial code associated with the mobile terminal.

According to a further aspect of the present invention, a mobile terminal is adapted to be installed with a subscriber identification module card for wireless communication with a communications network. The subscriber identification module card contains subscriber identification data. The mobile terminal comprises:
a memory unit;
means for allowing the owner of the mobile terminal to store the subscriber identification data of the subscriber identification module card of the owner in the memory unit;
means for allowing the owner of the mobile terminal to set a caller alert group which includes a call number that is associated with the subscriber identification module card of the owner of the mobile terminal;
means for allowing the mobile terminal to establish a communications link with the communications network in accordance with the subscriber identification module card installed within the mobile terminal during subsequent activation of the mobile terminal;
means for verifying whether the subscriber identification data stored in the memory unit matches that of the subscriber identification module card installed within the mobile terminal upon establishing the communications link with the communications network; and
means for enabling the mobile terminal to send a message to the caller alert group via the communications network when a match is not detected, the message including the subscriber identification data of the subscriber identification module card installed within the mobile terminal and an equipment serial code associated with the mobile terminal.

According to still another aspect of the present invention, a mobile terminal is adapted to be installed with a subscriber identification module card for wireless communication with a communications network. The subscriber identification module card contains subscriber identification data. The mobile terminal comprises:
a user input unit;
a memory unit;
a processor unit coupled to the user input unit and the memory unit; and
a computer program product for enabling the mobile terminal to indicate unauthorized use thereof, the computer program product comprising a computer readable storage medium that includes:
   a first code that directs the processor unit to allow the owner of the mobile terminal to store the subscriber identification data of the subscriber identification module card of the owner in the memory unit;
   a second code that directs the processor unit to allow the owner of the mobile terminal to set a caller alert group via the user input unit, the caller alert group including a call number that is associated with the subscriber identification module card of the owner of the mobile terminal;
   a third code that directs the processor unit to allow the mobile terminal to establish a communications link with the communications network in accordance with the subscriber identification module card installed within the mobile terminal during subsequent activation of the mobile terminal;
   a fourth code that directs the processor unit to verify whether the subscriber identification data stored in the memory unit matches that of the subscriber identification module card installed within the mobile terminal when the communications link with the communications network is established; and
   a fifth code that directs the processor unit to enable the mobile terminal to send a message to the caller alert group via the communications network when a match is not detected, the message including the subscriber identification data of the subscriber identification module card installed within the mobile terminal and an equipment serial code associated with the mobile terminal.

Other features and advantages of the present invention will become apparent in the following detailed description of the preferred embodiment with reference to the accompanying drawings, of which:
Figure 1 is a schematic electrical block diagram illustrating a mobile terminal that is configured according to the preferred embodiment of a method of indicating unauthorized use of the mobile terminal of the present invention; and
Figure 2A and 2B are flow charts illustrating how the mobile terminal is configured to indicate unauthorized use thereof in accordance with the method of the preferred embodiment.

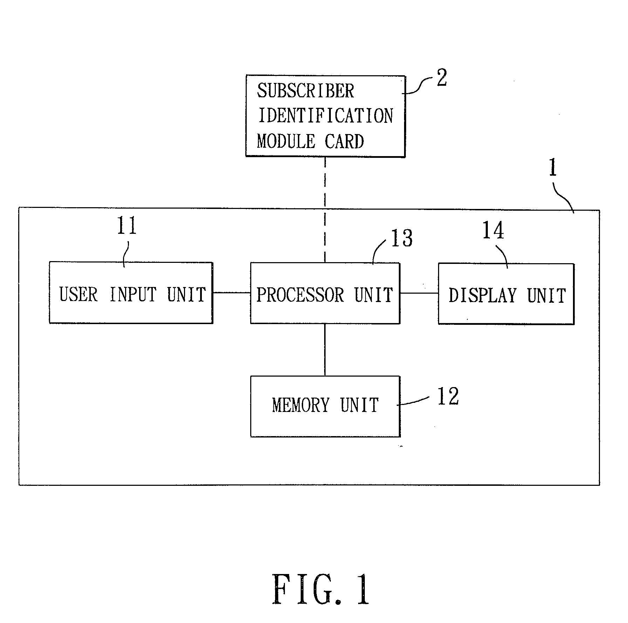

Figure 1 illustrates a mobile terminal 1, such as a mobile phone, a portable computer, an electronic book, and a personal digital assistant, that is configured according to the preferred embodiment of a method of indicating unauthorized use of the present invention. The mobile terminal 1 includes a user input unit 11, a memory unit 12, a display unit 14, and a processor unit 13 coupled to the user input unit 11, the memory unit and the display unit 14. The mobile terminal 1 is adapted to be installed with a subscriber identification module (SIM) card 2 for wireless communication with a communications network. The subscriber identification module card 2 contains subscriber identification data, such as a subscriber identification module serial number, an international mobile subscriber identification code and a mobile subscriber integrated services digital network number. The mobile terminal 1 further includes a computer program product which, in this embodiment, can be resident in the memory unit 12.

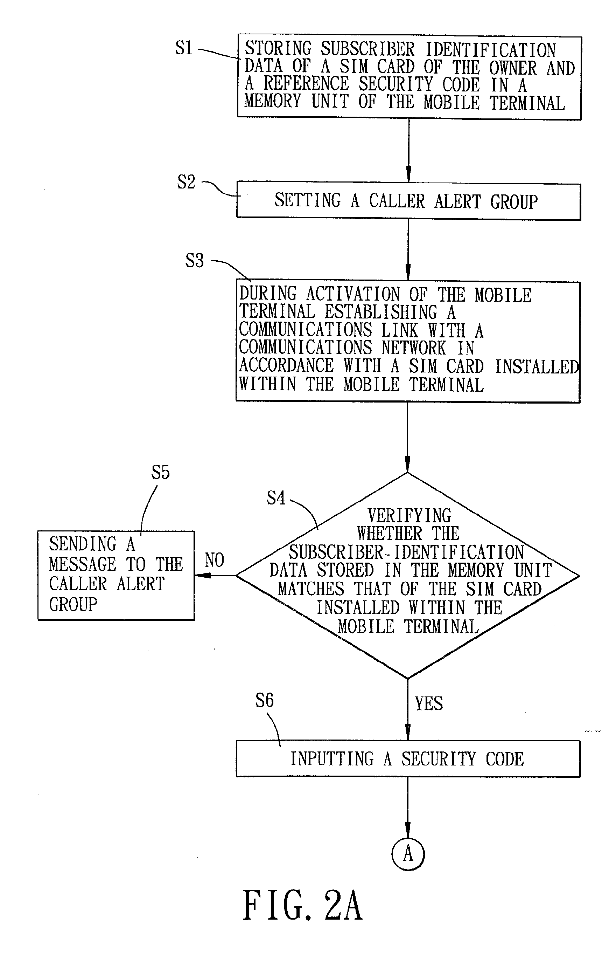

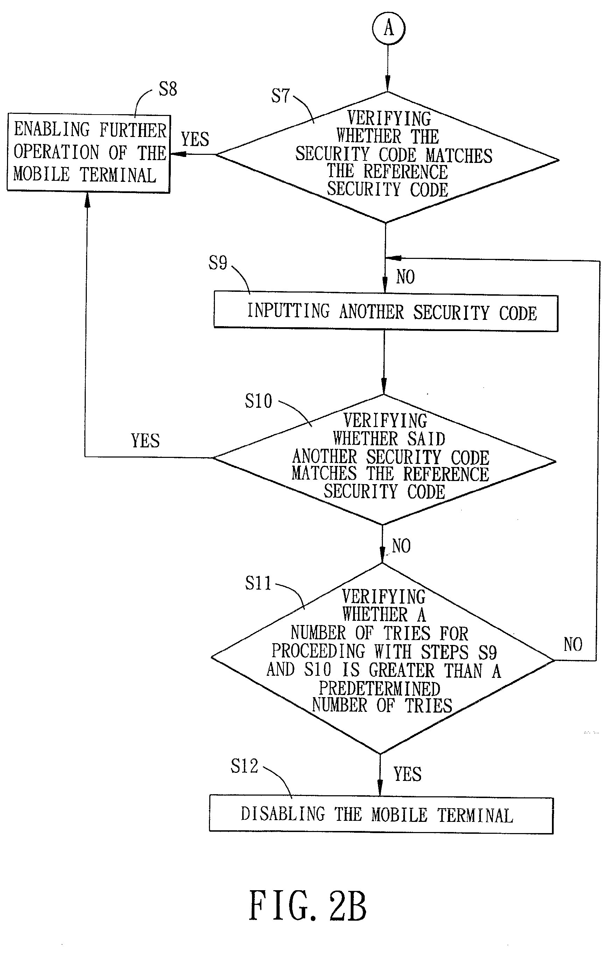

Referring to Figures 2A and 2B, there is shown a flow chart to illustrate how the mobile terminal 1 is configured to indicate unauthorized use thereof in accordance with the method of the preferred embodiment. In step S1, the computer program product configures the processor unit 13 to allow the owner of the mobile terminal 1 to store the subscriber identification data of the subscriber identification module card of the owner in the memory unit 12 of the mobile terminal 1. In this embodiment, the owner of the mobile terminal 1 is further allowed to store a reference security code in the memory unit 12 of the mobile terminal 1. In step S2, the computer program product configures the processor unit 13 to allow the owner of the mobile terminal 1 to set a caller alert group via the user input unit 11. The caller alert group includes at least one call number, one of which is associated with the subscriber identification module card 2 of the owner of the mobile terminal 1. In step S3, the computer program product configures the processor unit 13 to allow the mobile terminal 1 to establish a communications link with the communications network in accordance with the subscriber identification module card 2 installed within the mobile terminal 1 during subsequent activation of the mobile terminal 1. In step S4, the computer program product configures the processor unit 13 to verify whether the subscriber identification data stored in the memory unit 12 of the mobile terminal 1 matches that of the subscriber identification module card 2 installed within the mobile terminal 1 when the communications link with the communications network is established. In step S5, when a match is not detected, the computer program product configures the processor unit 13 to enable the mobile terminal 1 to send a message to the caller alert group via the communications network. The message has a format that complies with the conventional short message service, and includes the subscriber identification data of the subscriber identification module card 2 installed within the mobile terminal 1 and an equipment serial code associated with the mobile terminal 1. The message further includes cell location information attributed to the communications link between the mobile terminal 1 and the communications network. As such, if the mobile terminal 1 is lost or stolen, whenever unauthorized use of the mobile terminal 1 occurs, the owner of the mobile terminal 1 can thus receive the message sent by the mobile terminal 1 after being issued with a replacement subscriber identification module card. In step S6, when a match is detected, the computer program product configures the processor unit 13 to allow the user of the mobile terminal 1 to input a security code via the user input unit 11. In step S7, the computer program product configures the processor unit 13 to verify whether the security code matches the reference security code. In step S8, when the security code matches the reference security code, the computer program product configures the processor unit 13 to enable further operation of the mobile terminal 1, such as enabling and disabling the function of indicating unauthorized use of the mobile terminal 1, setting and editing the caller alert group, testing the function of indicating unauthorized use of the mobile terminal 1, changing the reference security code, etc. In step S9, when the previously inputted security code does not match the reference security code, the computer program product configures the processor unit 13 to allow the user of the mobile terminal 1 to input another security code. In step S10, the computer program product configures the processor unit 13 to verify whether said another security code matches the reference security code. In the affirmative, the flow proceeds back to step S8. In step S11, when the security code does not match the reference security code, the computer program product configure the processor unit 13 to verify whether a number of tries for proceeding with steps S9 and S10 is greater than a predetermined number of tries. If no, steps S9 and S10 are repeated. In step 12, when the number of tries for proceeding with steps S9 and S10 is greater than the predetermined number of tries, the computer program product configures the processor unit 13 to disable the mobile terminal 1.

Therefore, according to the method of the present invention, in the event that the mobile terminal 1 is lost or stolen, the owner of the mobile terminal 1 can be informed of the subscriber identification module data of the subscriber identification card of the unauthorized user, which can be used as evidence when retrieving the mobile terminal.

## Claims

1. A method of indicating unauthorized use of a mobile terminal (1) that is adapted to be installed with a subscriber identification module card (2) for wireless communication with a communications network, the subscriber identification module card (2) containing subscriber identification data, said method **characterized by** the steps of:
(a) allowing the owner of the mobile terminal (1) to store the subscriber identification data of the subscriber identification module card of the owner in a memory unit (12) of the mobile terminal (1);
(b) allowing the owner of the mobile terminal (1) to set a caller alert group which includes a call number that is associated with the subscriber identification module card (2) of the owner of the mobile terminal (1) ;
(c) during subsequent activation of the mobile terminal (1), allowing the mobile terminal (1) to establish a communications link with the communications network in accordance with the subscriber identification module card (2) installed within the mobile terminal (1);
(d) upon establishing the communications link with the communications network, verifying whether the subscriber identification data stored in the memory unit of the mobile terminal matches that of the subscriber identification module card installed within the mobile terminal; and
(e) when a match is not detected, enabling the mobile terminal (1) to send a message to the caller alert group via the communications network, the message including the subscriber identification data of the subscriber identification module card (2) installed within the mobile terminal (1) and an equipment serial code associated with the mobile terminal (1).

2. The method as claimed in Claim 1, **characterized in that**:
in step (a), the owner of the mobile terminal (1) is further allowed to store a reference security code in the memory unit (12) of the mobile terminal (1) ;
said method further comprising the steps of:
(f) when a match is detected, allowing the user of the mobile terminal (1) to input a security code;
(g) verifying whether the security code matches the reference security code; and
(h) enabling further operation of the mobile terminal (1) when the security code matches the reference security code.

3. The method as claimed in Claim 2, further **characterized by** the steps of:
(i) allowing the user of the mobile terminal (1) to input another security code when the previously inputted security code does not match the reference security code;
(j) verifying whether said another security code matches the reference security code; and
(k) repeating steps (i) and (j) for a predetermined number of tries until the inputted security code matches the reference security code.

4. The method as claimed in Claim 3, further **characterized by** the step of:
(l) disabling the mobile terminal (1) when a matching security code has yet to be inputted after the predetermined number of tries.

5. The method as claimed in Claim 1, **characterized in that** the message sent in step (e) further includes cell location information attributed to the communications link between the mobile terminal (1) and the communications network.

6. A computer program product for a mobile terminal (1) that is adapted to be installed with a subscriber identification module card (2) for wireless communication with a communications network, the mobile terminal (1) including a user input unit (11), a memory unit (12), and a processor unit (13) coupled to the user input unit (11) and the memory unit (12), the subscriber identification module card (2) containing subscriber identification data, said computer program product enabling the mobile terminal (1) to indicate unauthorized use thereof, said computer program product **characterized by**:
a computer readable storage medium comprising:
a first code that directs the processor unit (13) to allow the owner of the mobile terminal (1) to store the subscriber identification data of the subscriber identification module card (2) of the owner in the memory unit (12) of the mobile terminal (1);
a second code that directs the processor unit (13) to allow the owner of the mobile terminal (1) to set a caller alert group via the user input unit (11), the caller alert group including a call number that is associated with the subscriber identification module card (2) of the owner of the mobile terminal (1);
a third code that directs the processor unit (13) to allow the mobile terminal (1) to establish a communications link with the communications network in accordance with the subscriber identification module card (2) installed within the mobile terminal (1) during subsequent activation of the mobile terminal (1) ;
a fourth code that directs the processor unit (13) to verify whether the subscriber identification data stored in the memory unit (12) of the mobile terminal (1) matches that of the subscriber identification module card (2) installed within the mobile terminal (1) when the communications link with the communications network is established; and
a fifth code that directs the processor unit (13) to enable the mobile terminal (1) to send a message to the caller alert group via the communications network when a match is not detected, the message including the subscriber identification data of the subscriber identification module card (2) installed within the mobile terminal (1) and an equipment serial code associated with the mobile terminal (1).

7. The computer program product as claimed in Claim 6, **characterized in that** the short message further includes cell location information attributed to the communications link between the mobile terminal (1) and the communications network.

8. A mobile terminal (1) adapted to be installed with a subscriber identification module card (2) for wireless communication with a communications network, the subscriber identification module card (2) containing subscriber identification data, said mobile terminal (1) **characterized by**:
a memory unit (12) ;
means for allowing the owner of said mobile terminal (1) to store the subscriber identification data of the subscriber identification module card (2) of the owner in said memory unit (12) ;
means for allowing the owner of said mobile terminal (1) to set a caller alert group which includes a call number that is associated with the subscriber identification module card (2) of the owner of said mobile terminal (1);
means for allowing said mobile terminal (1) to establish a communications link with the communications network in accordance with the subscriber identification module card (2) installed within said mobile terminal (1) during subsequent activation of said mobile terminal (1);
means for verifying whether the subscriber identification data stored in said memory unit (12) matches that of the subscriber identification module card (2) installed within said mobile terminal (1) upon establishing the communications link with the communications network; and
means for enabling said mobile terminal (1) to send a message to the caller alert group via the communications network when a match is not detected, the message including the subscriber identification data of the subscriber identification module card (2) installed within said mobile terminal (1) and an equipment serial code associated with said mobile terminal (1).

9. The mobile terminal as claimed in Claim 8, **characterized in that** the message further includes cell location information attributed to the communications link between said mobile terminal (1) and the communications network.

10. The mobile terminal as claimed in Claim 8, **characterized in that** said mobile terminal (1) is a portable electronic device.

11. The mobile terminal as claimed in Claim 10, further **characterized in that** said portable electronic device is one of a portable computer, a mobile phone, an electronic book, and a personal digital assistant.

12. A mobile terminal (1) adapted to be installed with a subscriber identification module card (2) for wireless communication with a communications network, the subscriber identification module card (2) containing subscriber identification data, said mobile terminal (1) comprising:
a user input unit (11);
a memory unit (12);
a processor unit (13) coupled to said user input unit (11) and said memory unit (12); and
a computer program product for enabling said mobile terminal (1) to indicate unauthorized use thereof, said computer program product comprising a computer readable storage medium that includes:
a first code that directs said processor unit (13) to allow the owner of said mobile terminal (1) to store the subscriber identification data of the subscriber identification module card (2) of the owner in said memory unit (12);
a second code that directs said processor unit (13) to allow the owner of said mobile terminal (1) to set a caller alert group via said user input unit (11), the caller alert group including a call number that is associated with the subscriber identification module card (2) of the owner of said mobile terminal (1);
a third code that directs said processor unit (13) to allow said mobile terminal (1) to establish a communications link with the communications network in accordance with the subscriber identification module card (2) installed within said mobile terminal (1) during subsequent activation of said mobile terminal (1);
a fourth code that directs said processor unit (13) to verify whether the subscriber identification data stored in said memory unit (12) matches that of the subscriber identification module card (2) installed within said mobile terminal (1) when the communications link with the communications network is established; and
a fifth code that directs said processor unit (13) to enable said mobile terminal (1) to send a message to the caller alert group via the communications network when a match is not detected, the message including the subscriber identification data of the subscriber identification module card (2) installed within said mobile terminal (1) and an equipment serial code associated with said mobile terminal (1).

13. The mobile terminal as claimed in Claim 12, **characterized in that** the message further includes cell location information attributed to the communications link between said mobile terminal (1) and the communications network.

14. The mobile terminal as claimed in Claim 12, **characterized in that** said mobile terminal (1) is a portable electronic device.

15. The mobile terminal as claimed in Claim 14, further **characterized in that** said portable electronic device is one of a portable computer, a mobile phone, an electronic book, and a personal digital assistant.
